Europäisches Patentamt

European Patent Office

Office européen des brevets

(19)

(11) Publication number:

**0 395 353**
**A2**

(12) **EUROPEAN PATENT APPLICATION**

(21) Application number: **90304384.2**

(51) Int. Cl.5: **C01B 31/12**

(22) Date of filing: **24.04.90**

(30) Priority: **24.04.89 GB 8909258**

(43) Date of publication of application:
**31.10.90 Bulletin 90/44**

(84) Designated Contracting States:
**AT BE CH DE DK ES FR GB GR IT LI LU NL SE**

(71) Applicant: **SUTCLIFFE SPEAKMAN CARBONS LIMITED**
**Guest Street**
**Leigh, Lancashire WN7 2HE(GB)**

(72) Inventor: **Wildman, Joseph**
**97 Wigan Road**
**Leigh, Lancashire WN7 5AQ(GB)**
Inventor: **Derbyshire, Frank J.**
**Centre for Applied Energy Research**
**4572 Ironworks Pike Lexington,**
**Kentucky(US)**
Inventor: **Sharrock, Harold**
**72 Dunscore Road, Goose Green**
**Wigan, Lancashire WN3 6TA(US)**

(74) Representative: **Seaborn, George Stephen et al**
**c/o Edward Evans & Co. Chancery House**
**53-64 Chancery Lane**
**London WC2A 1SD(GB)**

(54) **Method of preparing activated or activatable carbon.**

(57) A method of preparing activated or activatable carbon, comprises:
- contacting nut shell or fruit stone and an oxidizing acid together at elevated temperature to produce an intermediate product having an oxidized matrix; and
carbonising the intermediate product to produce an activated or activatable carbon.

EP 0 395 353 A2

## METHOD OF PREPARING ACTIVATED OR ACTIVATABLE CARBON

The present invention relates to a method of preparing activated or activatable carbon.

In particular the invention relates to a method of preparing activated or activatable carbon from a starting material or precursor constituted by nut shell or fruit stone, such as peach pits, almond stones, olive stones, palm nut shells, coconut shell, cohune or babassu. Such starting materials are lingnocellulosic. They have a bulk density of 0.7 to 0.8 they comprise at least mainly protective tissue i.e. they have a cellular structure. Accordingly they are particularly suitable, at least in granular form, for producing activated carbon.

Hitherto treatment of nut shell or fruit stone to produce activated or activatable carbon has comprised the use of zinc chloride. However, the use of zinc chloride has several disadvantages Specifically large amounts of zinc chloride are required, zinc chloride is toxic and cannot easily be removed from the product, the zinc chloride cannot be re-cycled for re-use which leads to disposal problems, and a very long activation of the initially formed carbon with carbon dioxide is required in order to give the carbon a very high surface area.

It is an object of the invention to mitigate the aforementioned disadvantages.

According to the invention there is provided a method of preparing activated or activatable carbon, comprising:

contacting nut shell or fruit stone and an oxidizing acid at elevated temperature to produce an intermediate product having an oxidized matrix; and

carbonizing the intermediate product to produce a activated or activatable carbon.

The method of the invention thus comprises two essential steps, an oxidation step (which may also be referred to as an activation step) and a subsequent carbonisation step.

If the carbon produced is activatable or is activated but requires further activation, it may be activated or its activity enhanced in a conventional manner. For example, the activation or enhancement of activity may be carried out using steam or carbon dioxide.

The acid is preferably phosphoric acid.

The phosphoric acid preferably has a concentration of 40 to 90 percent v/v i.e. a concentration of 40 to 90 parts by volume of phosphoric acid per 100 parts by volume total of acid and water.

The nut shell or fruit stone precursor preferably comprises peach pits, almond shells, olive stones, coconut shell, cohune or babassu.

The oxidation of the precursor to form the intermediate product is preferably carried out at between 50 and 110°C.

The carbonisation of the intermediate product is preferably carried out to a temperature of 400 to 900°C at a heating rate of 1°C to 100°C per minute. More preferably the heating rate is in the range of 1°C to 10°C per minute.

The acid is preferably contacted with the nut shell under reflux to effect the oxidation of the nut shell.

The acid used may be re-cycled acid obtained from the refluxing.

After the intermediate product has been formed, the acid concentration may be increased by concentrating the acid, e.g. by boiling water from the acid. Where such concentration of the acid is carried out, it is preferred to boil down the acid, containing the intermediate product, to a sticky consistency.

The concentrated acid is referred to below as "liquor".

The acid may be removed from the intermediate product before the carbonisation step. Alternatively, the carbonisation step may be carried out in the presence of the acid, which may have been concentrated as described above, remaining from the oxidation step.

The intermediate product may be left in contact with the liquor for a prolonged period of time before the carbonisation step. The carbonisation step may then be carried out in the presence or absence of the liquor.

Preferably the acid liquor is not in excess during the carbonisation stage i.e. preferably there is no free liquor present during the carbonisation stage, all liquor present having been absorbed into the material being carbonised.

Where the carbonisation step is carried out in the absence of the acid, the intermediate product may be washed with water prior to the carbonisation.

The use of phosphoric acid as a chemical oxidant in preference to zinc chloride has certain physical advantages which make it a more attractive proposition. Initial cost, ease of handling, better prospects for re-use are immediately apparent, but by far the most attractive prospect is the relative ease with which phosphoric acid can be removed from treated materials by water-washing. Ultimate disposal of waste products is also an important factor.

By means of the invention it is possible to produce a microporous carbon product in which a very high proportion of the total porosity is of the order of less than 2nm pore size. The surface area may be in the range 1000 m$^2$ per gram to 2000 m$^2$ per gram.

It is possible, by manipulation of treatment prior to the carbonisation step, to obtain products of different quality levels.

Activated carbons with activities (determined as described below) ranging from 35% carbon tetrachloride (CTC) to 100% CTC are possible by varying the stages between reflux and carbonisation. The presence or absence of the phosphoric acid at the carbonisation stage has a direct bearing on product quality and the presence of acid during carbonisation appears to be essential if higher quality carbons are required.

For instance, elimination of the boiling down stage to thicken-up the acid provides a low quality product with a CTC adsorption of the order of 35-40%; removal of the acid after the boiling down stage produced an improved product, to about 55-60% CTC; retention of acid liquor during carbonisation can produce a product with a significantly higher adsorption level (up to 100 CTC) but appears to affect microporosity and retention to a degree. The conclusion to be drawn is that phosphoric acid is usually essential during carbonisation but that the amount present should be controlled.

Manipulation of conditions has produced carbons of good quality at the carbonisation stage, with further improvement to be anticipated as a result of activation. The use of activating gas, preferably $CO_2$, should lead to further controlled oxidation and retention of microporosity.

Low pressure CTC isotherms have clearly indicated the changes produced by the above manipulation of treatment at the carbonization stage; particularly with respect to the samples produced by inclusion of the liquor at the carbonisation step.

We have found that (a) draining of the unconcentrated acid but not washing the intermediate product before the carbonisation step and (b) raising of the carbonisation temperature to at least 800°C produces a significant inprovement in product quality and produces highly retentive carbon which provides an admirable base material for activation, preferably by carbon dioxide.

It has also been established that prolonged contact with the acid at ambient temperature, after concentration of the acid prior to carbonisation, affects the quality of the carbonised product giving yet another means of controlling eventual quality.

It should be noted that products from the carbonisation stage are strongly acidic and require quite large volumes of water washing to reduce the pH value to an acceptable level.

It may be possible to provide a neutralization stage before or after activation.

The oxidation step may be carried out under elevated pressure to reduce contact time.

From the Tables below, it can be seen that the invention gives a means of preparing carbons with a range of properties e.g. Butane Working Capacity, which has not been achieved hitherto.

The invention is illustrated by the following Examples.

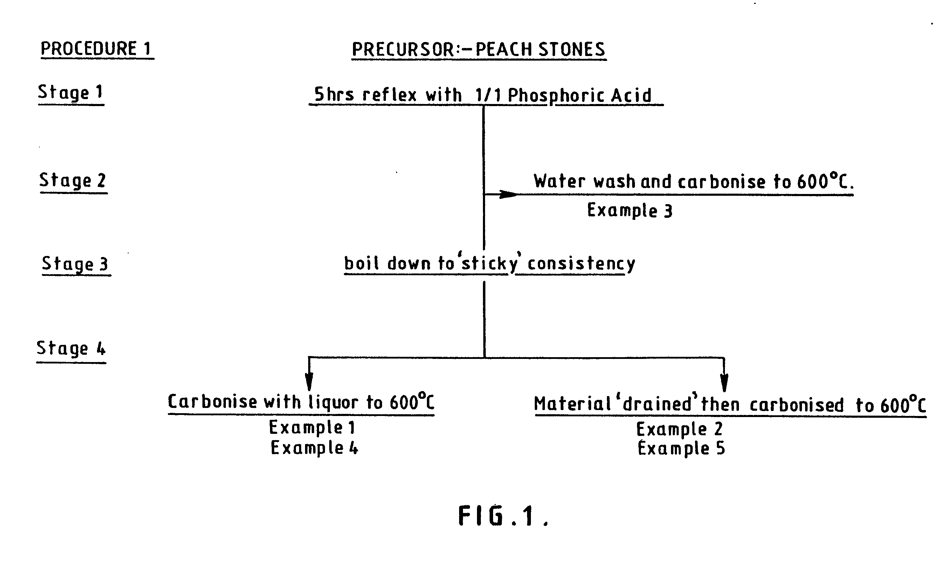

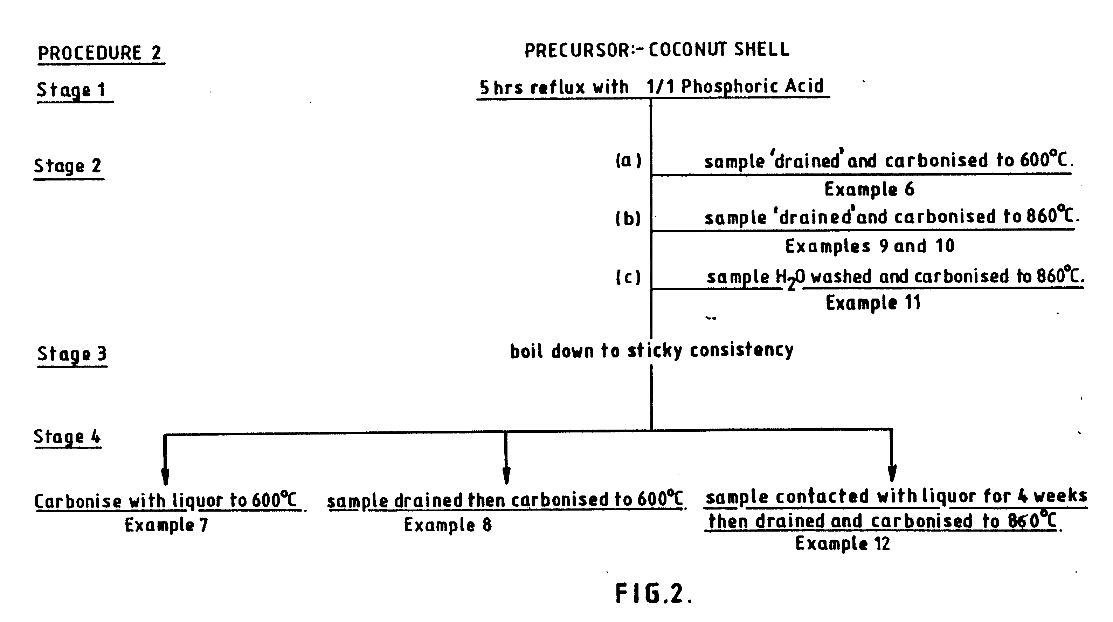

Examples A and B relates only to the first step of the process of the invention. Examples 1 to 34 relate to the complete process according to the invention. Examples 1 to 34 were carried out in accordance with the flow diagrams shown in Figures 1 and 2 of the accompanying drawings. Unless otherwise stated the examples were carried out at atmospheric pressure. At the end of each of Examples 1 to 34 properties of the carbon produced were measured.

Samples produced by the various stages outlined were quantified initially by the construction of a low pressure carbon tetrachloride (CTC) isotherm. This system provides information relevant to CTC adsorption, surface area development and surface energy. An estimate can also be made of the volume activity (VA).

In the tables, bulk densities are given in g cm$^{-3}$, surface areas in m$^2$g$^{-1}$, working capacities and saturation capacities in g per 100 cc and micropore volumes in cc g$^{-1}$.

EXAMPLE A

Raw peach stone was granulated to $\frac{1}{4}$-7 USS grade.

Five hundred grams of the granulated peach stone were introduced into a glass reaction vessel together with 600 mls of 1/1 (i.e. 50% v/v) phosphoric acid and refluxed for a period of 5 hours using an isomantle as the heat source.

Examination of some of the large granules indicated that acid penetration of the stone was effective.

EXAMPLE B

EP 0 395 353 A2

Example A was repeated but using coconut shell instead of peach stone.

Examination of some of the larger granules following the treatment with the phosphoric acid indicated that acid penetration of the nut shells was effective, there being little evidence of untouched material in the coconut shell granules, which are structurally more compact than peach stone granules.

### Examples 1 to 5

In these examples 500g of raw peach stone (granulated as in Example A) were mixed in a glass reaction vessel with phosphoric acid. The mixture was refluxed for five hours using an isomantle as a heat source. The phosphoric acid was 50% v/v phosphoric acid.

The resulting intermediate product (having an oxidized matrix) was treated as specified in Figure 1 and carbonised to 600°C at a heating rate of 2°C per minute.

Results are given in Table 1 below.

### Example 2 to 12

The procedure of Examples 1 to 5 was repeated but using granulated (as in Example A) coconut shell instead of peach stones. The treatment of the intermediate product resulting from treatment of the coconut shell with phosphoric acid was as specified in Figure 2.

Results are given in Table 2 below.

### Examples 13 to 15

In each of these examples (and in Examples 3 and 6 described above), 500 g of precursor in granulated form (as in Example A) and 600 ml of 50% v/v phosphoric acid were mixed in a glass reaction vessel. The mixture was refluxed for a period of five hours using an isomantle as a heat source.

At the end of the refluxing, the acid was drained from the resulting intermediate product and the intermediate product was carbonised to 600°C at a heating rate of 2°C per minute.

Results are given in Table 3 below.

Table 1

| Peach Stones - $H_3PO_4$ Treated | | | | | | | | |
|---|---|---|---|---|---|---|---|---|
| Example | Carbonisation Temp. °C | % w/w yield on carbonisation | Bulk Density | CTC Isotherm Data | | | Butane working capacity | Saturation capacity |
| | | | | CTC% | V.A. | Surface Area | | |
| 1 | 600°C | 22.8% | 0.47 | 83.8 | - | 1176 | 5.94 | 9.96 |
| 2 | 600°C | - | 0.56 | 58.7 | 20.1 | 823 | 4.31 | 9.67 |
| 3 | 600°C | 26.4% | - | 58.1 | | 815 | - | - |
| 4 | 600°C | - | 0.54 | 66.5 | 21* | 933 | 5.20 | 10.24 |
| 5 | 600°C | - | 0.52 | 63.1 | 25* | 885 | 4.28 | 10.66 |

* V.A. estimated from CTC isotherm assuming breakpoint = 90% saturation value

V.A. = Volume activity, and is a kinetic measurement of rate of pickup of CTC (Carbon Tetrachloride)

4

Table 2

| | Raw Coconut Shell - $H_3PO_4$ Treatment | | | | | | | |
|---|---|---|---|---|---|---|---|---|
| Example | Carbonisation Temp. °C | % w/w yield on carbonisation | Bulk Density | CTC Isotherm Data | | | Butane working capacity | Saturation capacity |
| | | | | CTC% | V.A. | Surface Area | | |
| 6 | 600°C | 40.9 | 0.55 | 44.9 | 20* | 629 | 3.37 | 8.96 |
| 7 | 600°C | - | 0.41 | 100.0 | 25* | 1403 | 5.45 | 11.82 |
| 8 | 600°C | - | 0.51 | 60.0 | 25* | 842 | 4.54 | 10.63 |
| 9 | 860°C | 23.0 | 0.47 | 68.0 | 26* | 954 | 3.69 | 10.74 |
| | | | | 67.0 | 24.5* | 940 | 3.69 | 10.74 |
| 10 | 860°C | - | 0.47 | 78.1 | 28* | 1096 | 4.96 | 10.75 |
| 11 | 860°C | 20.0 | 0.53 | 35.2 | 14* | 493 | 2.16 | 12.55 |
| 12 | 860°C | - | 0.35 | 104.5 | 22.4 | 1466 | 5.2 | 11.7 |
| | | | | 113.5 | 23.5 | 1593 | | |

* V.A. estimated from CTC isotherm assuming breakpoint = 90% saturation value

TABLE 3

| | Use of different precursors | | | | | | |
|---|---|---|---|---|---|---|---|
| Precursor | Example No. | Isotherm Data | | | Butane Sorption | | Bulk Dens. |
| | | CTC S/A | Nitrogen | | Saturation | Working Capacity | |
| | | | S/A | micropore Vol | | | |
| Peach | 3 | 815 | 1079 | 0.42 | - | - | - |
| Coconut | 6 | 629 | 840 | 0.31 | 9.0 | 3.4 | 0.55 |
| Olive | 13 | 902 | 1097 | 0.40 | 11.2 | 4.7 | 0.55 |
| Palm nut | 14 | 469 | 757 | 0.29 | 7.7 | 5.0 | 0.53 |
| Almond | 15 | 1382 | 1241 | 0.42 | 10.1 | 5.6 | 0.44 |

Examples 16 to 18

In each of these examples, the precursor was raw coconut shell. The strength of the acid was varied, the reflux time was $1\frac{1}{2}$ hours but otherwise the method described in Examples 13 to 15 was carried out.

Results are given in Table 4 below.

TABLE 4

| Effect of varying acid strength | | | | | | | | |
|---|---|---|---|---|---|---|---|---|
| Example No. | Acid· Strength % v/v | Isotherm Data | | | Butane Sorption | | Bulk Dens. | |
| | | CTC S/A | Nitrogen | | Saturation | Working Capacity | | |
| | | | S/A | Micropore Vol | | | | |
| 16 | 50 | 469 | 657 | 0.25 | 7.6 | 3.1 | 0.55 | |
| 17 | 60 | 519 | 892 | 0.33 | 9.5 | 4.1 | 0.45 | |
| 18 | 75 | | 1219 | 0.42 | 12.9 | 7.0 | 0.43 | |

## Example 19

Example 16 was repeated except that the reflux period (contact time) was altered.

Table 5 below gives results and compares the results with those obtained in Examples 6 and 16.

TABLE 5

| Effect of varying contact time | | | | | | | |
|---|---|---|---|---|---|---|---|
| Example No. | Contact time (hrs) | Isotherm Data | | | Butane Sorption | | Bulk Dens. |
| | | CTC S/A | Nitrogen | | Saturation | Working Capacity | |
| | | | S/A | Micropore Vol | | | |
| 16 | 1.5 | 469 | 657 | 0.25 | 7.6 | 3.1 | 0.55 |
| 19 | 3.0 | 503 | | | 8.6 | 3.2 | 0.55 |
| 6 | 5.0 | 629 | 840 | 0.31 | 9.0 | 3.4 | 0.55 |

## Example 20

Example 16 was repeated except after treating the coconut shell precursor with acid, the resulting mixture of intermediate product and acid was volume reduced by boiling until the intermediate product assumed a sticky consistency. The volume reduced product was carbonised, as described in Example 16, together with the liquor.

Table 6 below gives results obtained and compares them with the results of Example 6.

Table 6

| No volume reduction vs. volume reduction | | | | | | | |
|---|---|---|---|---|---|---|---|
| Example No. | Preparation | Isotherm Data | | | Butane Sorption | | Bulk Dens |
| | | CTC S/A | Nitrogen | | Saturation | Working Capacity | |
| | | | S/A | Micropore Vol | | | |
| 6 | No vol. reduce | 629 | 840 | 0.31 | 9.0 | 3.4 | 0.55 |
| 20 | Vol. reduce | 1403 | 1333 | 0.47 | 11.8 | 5.5 | 0.41 |

## Example 21

Example 20 was repeated except that following the volume reduction the excess liquor was drained from the intermediate product, which was then carbonised.

Table 7 below gives results obtained and compares them with the results of Example 20.

Table 7

| Carbonisation with and without liquor following volume reduction | | | | | | | |
|---|---|---|---|---|---|---|---|
| Example No. | Preparation | Isotherm data | | | Butane Sorption | | Bulk Dens. |
| | | CTC S/A | Nitrogen | | Saturation | Working Capacity | |
| | | | S/A | Micropore vol | | | |
| 20 | With liquor | 1403 | 1333 | 0.47 | 11.8 | 5.5 | 0.41 |
| 21 | Without liquor | 842 | 1066 | 0.40 | 10.6 | 4.5 | 0.51 |

## Example 22 to 25

Example 13 was repeated using raw olive stone as precursor. In Examples 22 and 23, the intermediate product was drained of acid (as in Example 13). In Examples 24 to 25, the intermediate product and acid were volume reduced as in Example 20. Carbonisation in Examples 23 and 25 was effected at 860°C instead of 600°C.

Results are given in Table 8 below.

7

Table 8

| Effect of carbonisation temperature | | | | | | | | |
|---|---|---|---|---|---|---|---|---|
| Example No. | Prepar- | Temp °C | Isotherm data | | | Butane Sorption | | Bulk Dens |
| | | | CTC S/A | Nitrogen | | Saturation | Working Capacity | |
| | | | | S/A | Micropore vol | | | |
| 22 | Drain | 600 | 902 | 1097 | 0.40 | 11.2 | 4.2 | 0.55 |
| 23 | Drain | 860 | 1009 | | | 12.0 | 4.7 | 0.50 |
| 24 | Vol. reduce | 600 | 1302 | | | 10.2 | 5.6 | 0.37 |
| 25 | Vol. reduce | 860 | 1403 | | | 11.5 | 6.1 | 0.35 |

Examples 26 to 28

Example 13 was repeated using raw stone as the precursor and using 70% v/v phosphoric acid instead of 50% v/v phosphoric acid. The mixture of intermediate product and phosphoric acid was volume reduced as in Example 20 and carbonised at various temperatures with liquor).

Results are given in Table 9 below.

Table 9

| Effect of varying carbonisation temperatures | | | | | | |
|---|---|---|---|---|---|---|
| Example No. | Temp. °C | Nitrogen Isotherm Data | | Butane Sorption | | Bulk Dens |
| | | S/A | Dubinin micropore vol. | Saturation | Working Capacity | |
| 26 | 450 | 875 | 0.306 | | 10.5 | 0.36 |
| 27 | 600 | 1061 | 0.378 | | 8.8 | 0.34 |
| 28 | 860 | 1605 | 0.596 | | 10.8 | 0.32 |

Examples 29 to 30

Example 27 was repeated but with varying dwell times at the carbonisation temperature (600° C). Results are given in Table 10 below and compared with the results of Example 27.

Table 10

| Effect of varying dwell time at carbonisation temperature | | | | | | |
|---|---|---|---|---|---|---|
| Example No. | Dwell time (hrs) | Nitrogen Isotherm data | | Butane Sorption | | Bulk Dens. |
| | | S/A | Dubinin micropore | Saturation | Working Capacity | |
| 27 | 0 | 1061 | 0.378 | | 8.82 | 0.34 |
| 29 | 2 | 1389 | 0.526 | | 9.40 | 0.34 |
| 30 | 4 | 1132 | 0.400 | | 8.00 | 0.34 |

Examples 31 to 34

250 gm of raw coconut shell granulated to ¼ -7 USS grade were mixed with 500 ml of 90% v/v phosphoric acid and the mixture was treated at pressure in a pressure vessel for a period of 2 hours. The mixture was subsequently removed from the presure vessel and drained.

Drained material was held at 180°C for 1 hour and 2 hours (dwell time) respectively prior to carbonisation to 600°C at 2°C per minute. Drained material was also carbonised at 860°C with no dwell time. Results are given in Table 11 below.

TABLE 11

| Effect of varying pressure | | | | | | | |
|---|---|---|---|---|---|---|---|
| Example No. | Dwell time (hrs) | Carbonisation Temp. | Nitrogen isotherm data | | Butane sorption | | Bulk Dens |
| | | | S/A | Dubinin micropore vol. | Saturation | Working Capacity | |
| 31 | Nil | 600 | 953 | 0.34 | 11.41 | 6.86 | 0.53 |
| 32 | 1 | 600 | 1056 | 0.38 | 13.21 | 7.63 | 0.45 |
| 33 | 2 | 600 | 918 | 0.33 | 13.15 | 6.88 | 0.47 |
| 34 | Nil | 880 | 1340 | 0.47 | 14.61 | 7.71 | 0.41 |

Measurement techniques used in the examples are described below.

Butane Capacity Test

Adsorption

Granulate material to 12-25 USS grade and dry at 110°C. Measure 10 ml of carbon into a sample tube, weigh. Pass high grade butane through the sample at an isothermal temperature of 25°C until the sample attains constant weight.

Desorption

9

Pass air at 25°C at the rate of 100 ml/min through the carbon sample for 20 mins. i.e. 200 bed volumes, and record the weight loss.

Calculation

The saturation and working capacity values are recorded on the basis of a 100 ml. volume, the working capacity being the weight of butane desorbed by 200 bed volumes of air from the 10 ml. sample volume. A factor is used to calculate the value on a 100ml basis.

(An initial desorption temperature of 65°C was later amended to 25°C for test standardisation purposes).

Nitrogen isotherm data

Nitrogen adsorption isotherms were determined by the use of an Omnisorp 100 instrument.

Samples were oven-dried at 110°C prior to evacuation to the region of $10^{-3}$ torr at 300°C for 7-10 hours. High purity nitrogen was adsorbed at -193°C, at gradually increasing pressures terminating at 750-760 mm Hg.

Surface areas were calculated using the BET equation at values of relative pressure within the linear range, i.e. 0.006-0.15.

Dubinin micropore volumes were calculated over the linear range

Log $(Po/p)^2$ = 5 to 15

CTC Isotherm Data

A gravimetric technique involving adsorption of carbon tetrachloride vapour at an isothermal temperature of 25°C was employed. CTC/air mixtures were generated by mixing saturated and solvent-free streams to attain a required partial pressure.

Adsorption levels were determined at four points covering the linear range of the BET equation and surface areas were calculated from the slope of the Langmuir plot.

Relative pressures of 0.0225, 0.0480, 0.0893 and 0.1357 were used.

Volume Activity

The volume activity test assesses the adsorptive capacity of a carbon gravimetrically, results being expressed on the basis of carbon tetrachloride adsorption in g/100 cm$^3$ of carbon.

Air containing 0.5% v/v C.T.C. passes through a tube containing 20 cm$^3$ of carbon until solvent can be detected, by gas analyser, in the effluent air. Adsorption is carried out at 25°C and determined gravimetrically.

Values giving a good approximation to the volume activity can be obtained from a C.T.C. isotherm at the appropriate partial pressure of 3.8 Hg. Such values represent adsorption to saturation and comparison with w/w adsorption values to breakpoint indicates that a value of 90% of the saturation value is not unrealistic. Conversion w/w to w/v yields the volume activity.

**Claims**

1. A method of preparing activated or activatable carbon, comprising:
contacting nut shell or fruit stone and an oxidizing acid together at elevated temperature to produce an intermediate product having an oxidized matrix; and
carbonising the intermediate product to produce an activated or activatable carbon.

2. A method according to claim 1, wherein the carbon produced is treated to activate it or to enhance its activity.

3. A method according to either preceding claim, wherein the acid is phosphoric acid.

4. A method according to claim 3, wherein the phosphoric acid has a concentration of 40 to 90 parts by volume of phosphoric acid per 100 parts by volume total acid and water.

5. A method according to any preceding claim, wherein the nut shell or fruit stone comprises peach pits, almond shells, olive stones, coconut shell, cohune or babassu.

6. A method according to any preceding claim, wherein said elevated temperature is 50 to 110°C.

7. A method according to any preceding claim, wherein the carbonisation is carried out to 400° to 900°C at a heating rate of 1° to 100°C per minute.

8. A method according to any preceding claim, wherein the nut shell and the oxidizing acid are contacted together under reflux.

9. A method according to any preceding claim, wherein after the intermediate product has been formed the concentration of the acid is increased.

10. A method according to claim 9, wherein the intermediate product is allowed to remain in contact with the concentrated acid for a prolonged period of time before the carbonisation is carried out.

11. A method according to any preceding claim, wherein excess acid is removed from the intermediate product before the carbonisation is carried out.

12. A method according to claim 11, wherein the intermediate product is washed with water after removal of the acid and before carbonisation.

13. A method according to any of claims 1 to 11, wherein the carbonisation of the intermediate product is carried out in the presence of the acid.

14. A method according to any preceding claim wherein the contacting of the nutshell or fruit stone with the oxidizing acid is carried out under elevated pressure.

15. A method of preparing activated or activatable carbon substantially as described herein in any of Examples 1 to 34.

**PROCEDURE 1**

**PRECURSOR:—PEACH STONES**

Stage 1     5hrs reflex with 1/1 Phosphoric Acid

Stage 2     →   Water wash and carbonise to 600°C.
           Example 3

Stage 3     boil down to 'sticky' consistency

Stage 4

Carbonise with liquor to 600°C        Material 'drained' then carbonised to 600°C
Example 1                               Example 2
Example 4                               Example 5

# FIG.1.

EP 0 395 353 A2

PROCEDURE 2  PRECURSOR:- COCONUT SHELL

Stage 1  5 hrs reflux with 1/1 Phosphoric Acid

Stage 2
(a) sample 'drained' and carbonised to 600°C.
Example 6
(b) sample 'drained' and carbonised to 860°C.
Examples 9 and 10
(c) sample $H_2O$ washed and carbonised to 860°C.
Example 11

Stage 3  boil down to sticky consistency

Stage 4

Carbonise with liquor to 600°C.  sample drained then carbonised to 600°C.  sample contacted with liquor for 4 weeks then drained and carbonised to 860°C.
Example 7  Example 8  Example 12

FIG.2.

EP 0 395 353 A2